# EUROPÄISCHE PATENTSCHRIFT

(11) **EP 1 897 716 B1**
(45) Veröffentlichungstag und Bekanntmachung des Hinweises auf die Patenterteilung: **26.03.2014**
(21) Anmeldenummer: 07015422.4
(22) Anmeldetag: 07.08.2007
(51) Int. Cl.: B60J 7/047, B60J 7/12

(54) **Flexibles Fahrzeugdach**
Flexible vehicle roof
Toit de véhicule flexible

(30) Priorität: 08.09.2006 DE 102006042295
(43) Veröffentlichungstag der Anmeldung: 12.03.2008
(73) Patentinhaber: Dr. Ing. h.c. F. Porsche AG, 70435 Stuttgart (DE)
(72) Erfinder: Beierl, Dominik, 70825 Korntal-Münchingen (DE); Braun, Wolfgang, 73095 Albershausen (DE); Hermann, Felix, 71229 Leonberg (DE); Schulz, Lars, 15566 Schöneiche (DE)

(56) Entgegenhaltungen:
- EP-A1- 1 092 579
- EP-A1- 1 092 580
- EP-A1- 1 325 826
- EP-A1- 1 331 122
- EP-A1- 1 338 454
- EP-A2- 1 555 152
- WO-A1-2004/041571
- DE-A1- 10 119 069

## Beschreibung

Die Erfindung/Neuerung betrifft ein flexibles Fahrzeugdach, mit den Merkmalen des 0berbegriffes des Anspruches 1. Insbesondere weist es eine flexible Dachhaut und einer Mehrzahl von mit dieser zusammenwirkenden Stützelementen auf, die zumindest zum Teil bereichsweise als flächige, die Dachhaut stützende Flächenelement ausgebildet sind und gemeinsam mit der Dachhaut von einer Schließstellung in eine den Fahrzeuginnenraum freigebende Öffnungsstellung verlagerbar sind. Dabei werden mehrere der Flächenelemente in eine zumindest bereichsweise Überdeckung gebracht.

Aus DE 101 119 069 ist ein Klappverdeck für ein Cabriolet-Fahrzeug bekannt, das aus drei starren Dachteilen besteht, wobei das vorderste Dachteil sich linear unter das zweite dem anschließende Dachteil verlagert und diese beiden Dachteile sich wiederum unter das dritte Dachteil linear verlagern. Abschließend wird das die drei Dachteile umfassende Paket in den Verdeckablageraum abgesenkt.

Ein derartiger Einfaltmechanismus ist jedoch nicht für ein mit einer flexiblen Dachhaut bespanntes Dach geeignet, da durch die Verlagerung des vorderen Dachteils unter das dahinter liegende, eine Verdeckstoffanbindung nicht oder nur mit hohem konstruktivem Aufwand möglich wäre.

Aus der EP 1 331 122 A1 ist ein versenkbares Hardtop bekannt, welches aus drei Dachabschnitten bzw. Schalen besteht, wobei die beiden vorderen Abschnitte simultan zum hinteren dritten Abschnitt nach hinten unten abgesenkt werden. Dabei wird der vordere Abschnitt zunächst über den sich absenkenden zweiten Abschnitt bewegt und anschließend zwischen diesen und den dritten Abschnitt hineinbewegt. Das dritte Dachelement wird derart über einen Drehpunkt am Hauptlager verschwenkt, daß anschließend die Oberseiten der Dachteile nach unten weisen.

Dieses dreiteilige Hardtop bietet im Vergleich zu dem vorbenannten zweiteiligen Hardtop bereits eine deutliche Verbesserung des Komforts und der Größe der Fahrgastzelle, ebenso kann dieses dreiteilige Hardtop mit einem textilen Verdeck versehen werden, jedoch weist es ein hohes Gesamtgewicht auf, da das die Heckscheibe aufnehmende dritte Dachteil als C-Säule fungiert und aus Vollmaterial gefertigt ist. Nachteilig ist insbesondere, daß durch den Bewegungsablauf eines Dachs mit drei großen, rotatorisch bewegten Dachschalen, das Volumen, welches die Dachteile bei ihrer Rotationsbewegung überstreichen, größer ist, als mit nur vier kleineren Dachschalen oder einer Linearbewegung. Da sich die Dachteile aber zwingend innerhalb einer vom textilen Verdeckstoff zu lässigem Hüllvolumen ablegen lassen müssen, ist grundsätzlich ein möglichst kleines Bewegungsvolumen anzustreben. Nachteilig ist insbesondere auch die Rotationsbewegung der Dachteile, um den Drehpunkt des Hauptlagers, da eine derartige Verdrehung der drei Dachteile eine hohe Belastung des Drehpunktes mit sich bringt und dieser damit entsprechend verstärkt ausgeführt sein muß. Außerdem muß ausreichend freier Raum zur Verfügung gestellt werden, damit insbesondere die Drehbewegung des dritten Dachteils ausgeführt werden kann. Des weiteren wird durch den umfangreichen Bewegungsablauf der drei Dachteile entsprechend viel Zeit benötigt, um das Dach in seine Absenkstellung verbringen zu lassen. Da in abgesenkter Stellung die Unterseite des zweiten Dachteils nach oben weist, wird ein greßflächiger Verdeckkastendeckel benötigt, um eine Verschmutzung der Unterseite des zweiten Dachteils zu verhindern.

Ferner ist aus der EP 1 555152 A2 ein flexibles Fahrzeugdach bekannt, das mit einer flexiblen Dachhaut und einer Mehrzahl von Stützelementen besteht, die aus einer Schließsteliung in eine Offenstellung verlagerbar sind. Die dort gezeigte Dachkinematik beinhaltet ebenfalls Dachlenker und Hauptienker.

Der Erfindung/Neuerung liegt die Aufgabe zugrunde, ein flexibles Fahrzeugdach, das sowohl eine flexible Dachhaut als auch mindestens zwei flächenartige Stützelemente umfaßt, derart auszubilden, daß leichtes und zugleich stabiles flexibles Fahrzeugdach geschaffen wird. Weiter ist es Aufgabe der Erfindung, das flexible Fahrzeugdach derart auszugestalten, daß die Verlagerung von der Offen- in die Schließstellung und umgekehrt eine nur geringe Zeitspanne benötigt und insbesondere durch die flächenartigen Stützelemente bei geschlossenem Dach eine ansprechende Außenkontur gewährleistet wird.

Als Kern der Erfindung/Neuerung wird es angesehen, daß ein vorderes, die Dachnase bildendes Flächenelement in Öffnungsstellung über einem hinteren, eine Heckscheibe umfassenden Element angeordnet ist und ein drittes, in Schließstellung zwischen dem vorderen und dem hinteren Element angeordnetes Flächenelement während der Öffnungsphase zwangsgekoppelt in eine unter dem vierten Element liegende Packstellung verschiebbar ist. Durch die Unterteilung des Fahrzeugverdeckes in drei bzw. vier Dachteile wird der erste erfindungsgemäße Vorteil erreicht, wonach die Länge des in Packlage liegenden Dachteilepaketes reduziert wird. Des weiteren wird im Fall von vier kleinen Dachschalen und der speziellen Kinematik, abtauchen der dritten Dachschale unter die vierte Dachschale, ein Ablegen des Daches innerhalb der vom textilen Verdeckstoff zu lässigem Hüllvolumen erreicht. Ebenso wird durch die Verwendung von drei bzw. vier Dachteilen die Beanspruchung an den Lagerpunkten der einzelnen Dachteile reduziert, da sich die Gesamtmasse des Fahrzeugdaches auf drei bzw. vier statt auf zwei oder drei Dachteile verteilt. Da das erste Dachteil in Verdeckablagestellung das oberste Teil bildet und dessen Oberseite auch in der Ablagestellung nach oben gerichtet ist, kann diese Ausrichtung sowohl als Schutz vor mechanischen Einflüssen als auch für ein optisch ansprechendes Erscheinungsbild des vordersten Dachteils jeweils in Verbindung mit einem Verdeckkastendeckel bilden. Durch das Abtauchen, im wesentlichen lineare Verlagerung, des dritten Flächenelementes unter das vierte die Heckscheibe aufnehmende Flächenelement wird in Packstellung die Heckscheibe sowohl auf ihrer Oberseite als auch auf der Unterseite durch Flächenelemente vor mechanischen Einflüssen geschützt. Wenn die erfindungsgemäße Dachkonstruktion mit drei Flächenelementen realisiert wird, so ist das in dieser Beschreibung erste und zweite Flächenelement als eines zu lesen, folglich bildet dieses Flächenelement die Dachnase und ist in Verdeckschließstellung dem vorletzten, abtauchenden Flächenelement anschließend angeordnet.

In vorteilhafter Weise verlagert sich das erste Flächenelement während der Öffnungsphase über das zweite Flächenelement, diese beiden Flächenelemente schließen zusammen mit dem vierten Element in Form einer Z-Faltung (Parallelverschiebung) das zweite Flächenelement zwischen sich ein. Damit kann eine sehr kompakte Packlage der Verdeckschalen erreicht werden. Des weiteren wird mit den vier kleineren Dachschalen und der Kinematikkombination der Z-Faltung mit Parallelverschiebung (dem abtauchen der dritten Dachschale unter die vierte Dachschale) das Ablagepackage minimiert. So können alle Dachteile mit der gleichen Bombierung "zwiebelschalenmäßig" übereinander abgelegt werden.

In einer Vorteilhaften Ausführungsform mit beispielsweise vier Flächenelementen ist das dritte Flächenelement mit einem mindestens eines der Flächenelemente abstützenden Lenker derart wirkverbunden, dass das dritte Flächenelement eine Schubbewegung vollzieht. Bei einer Ausführungsform mit insgesamt drei Flächenelementen steht das dritte in Wirkverbindung mit dem Lenker.

Eine weitere vorteilhafte Maßnahme ist es, im Bereich der Vorderkante und der Hinterkante des dritten Flächenelementes nach unten abstehende Haltearme anzuordnen, von denen der vordere an einem mindestens ein Flächenelement abstützenden Lenker gelenkig befestigt ist und von denen der hintere in einer im Bereich des vierten Elementes angeordneten Kulissenführung gelagert ist. Damit kann auf einfache Weise die Verlagerung des dritten Flächenelementes realisiert werden, da die Krafteinleitung für die Verschiebung lediglich vom Lenker und dem Eigengewicht der dritten Dachschale ausgeht und die Steuerung der Bewegungsrichtung des dritten Flächenelementes über die Kulissenführung realisiert wird. Durch die relativ freie Lagerung der Hinterkante des dritten Flächenelementes werden mögliche Fehlerquellen, insbesondere Spannungen vermieden.

Es hat sich als vorteilhaft erwiesen, das erste Flächenelement durch einen Dachlenker und das zweite Flächenelement durch einen Hauptlenker abzustützen und den vorderen Haltearm des dritten Flächenelementes gelenkig am Dachlenker zu befestigen. Durch das Vorsehen eines Dach- und eines Hauptlenkers wird es ermöglicht, das erste und das zweite Dachteil zueinander in Form einer Parallelverschiebung zu verlagern und während des gesamten Verdeckablageprozesses eine nach oben gerichtete Ausrichtung der Oberseiten der ersten und zweiten Dachschale zu gewährleisten. Ein Vorteil dieser konstant bleibenden Ausrichtung der Oberflächen des ersten und zweiten Flächenelementes ist es, daß die Anordnung eines Verdeckabschnittes der das erste und das zweite Flächenelement verbindet, ermöglicht wird.

Eine weitere vorteilhafte Maßnahme ist es, den Dachlenker an dem einen Ende am Hauptlager und an dem gegenüberliegenden Ende am ersten Flächenelement zu lagern und an seinem dem ersten Flächenelement zugewandten Bereich mit dem zweiten Flächenelement gelenkig zu verbinden. Damit wird eine Viergelenkkinematik aufgebaut, die das zweite Dachelement bewegt.

Im weiteren wird vorgeschlagen, daß das dritte Flächenelement während der Öffnungsphase in einer zum vierten Element im wesentlichen parallelen Bewegung geführt ist. Damit kann das dritte Flächenelement auf eine einfache und platzsparende Weise in eine Packstellung verbracht werden. In einer vorteilhaften Ausführungsform durchläuft das dritte Flächenelement während der Öffnungsphase zwei Bewegungsphasen, wobei in der ersten Bewegungsphase die Bewegung eine aus der Dachebene nach unten gerichtete Komponente und eine parallel zum vierten Element gerichtete weitere Richtungskomponente besitzt und in der zweiten Bewegungsphase eine im wesentlichen lineare und parallel zum vierten Element gerichtete Bewegung ausführt. Dies kann beispielsweise durch eine im Bereich oder am vierten Flächenelement angeordnete Führungskulisse realisiert werden, die wenigstens zwei Abschnitte a, b aufweist, die miteinander einen stumpfen Winkel einschließen. Durch eine derartige Umsetzung der Steuerung des dritten Dachelementes läßt sich eine zuverlässige, rein mechanische Zwangsteuerung des dritten Flächenelementes erreichen.

Im weiteren wird vorgeschlagen, daß das vierte Element in der ersten Bewegungsphase der Öffnungsbewegung mit seiner Vorderkante nach oben hinten überführbar und in der anschließenden Bewegungsphase diese Vorderkante nach unten hinten absenkbar ist. Eine derartige Bewegung des vierten Elementes begünstigt die unter dem vierten Element abtauchende Bewegung des dritten Flächenelementes, beschleunigt den gesamten Einklappvorgang und läßt diesen auf einen kleineren Raum stattfinden.

In diesem Zusammenhang ist es vorteilhaft, den Spannbügel in der Verlagerung des Verdecks in die Packstellung in einer ersten Bewegungsphase eine bogenförmige, nach hinten unten gerichtete und in einer anschließenden Bewegungsphase eine im wesentlichen lineare nach hinten gerichtete Bewegung ausführen zu lassen. Damit wird erreicht, daß das am Spannbügel wirkverbundene vierte Element auf einfache Weise seine Aufstellbewegung (Vorderkante bewegt sich nach oben hinten) ausführt.

Vorteilhafter Weise ist das dritte Flächenelement nicht mit dem Verdeckstoff verbunden, so daß dieses ohne Rücksicht auf eine Verdeckstoffanbindung in eine möglichst kompakte Packlage verlagert werden kann. Der Verdeckstoff ist mit dem ersten Flächenelement wenigstens teilweise flächig und mit dem zweiten Flächenelement zumindest linienartig oder punktuell verbunden. Durch die flächige Anbindung des Verdeckstoffes an dem ersten Flächenelement wird eine sowohl im geschlossenen, während der Verdeckverlagerung als auch in der Verdeckoffenstellungsposition eine das vorderste Flächenelement gleichmäßig und zuverlässig beaufschlagendes Textilverdeck gewährleistet, daß das optische Erscheinungsbild in jeder Verdeckstellung positiv beeinflußt. Die linienartige oder punktuelle Anbindung des Verdeckstoffes an dem zweiten Flächenelement beeinflußt die Handhabung des Verdeckstoffes während der Verdeckverlagerungsphase positiv, da die Möglichkeiten eines falschen Faltenwurfes des Verdeckstoffes während der Verdecköffnungsphase entscheidend verringert werden.

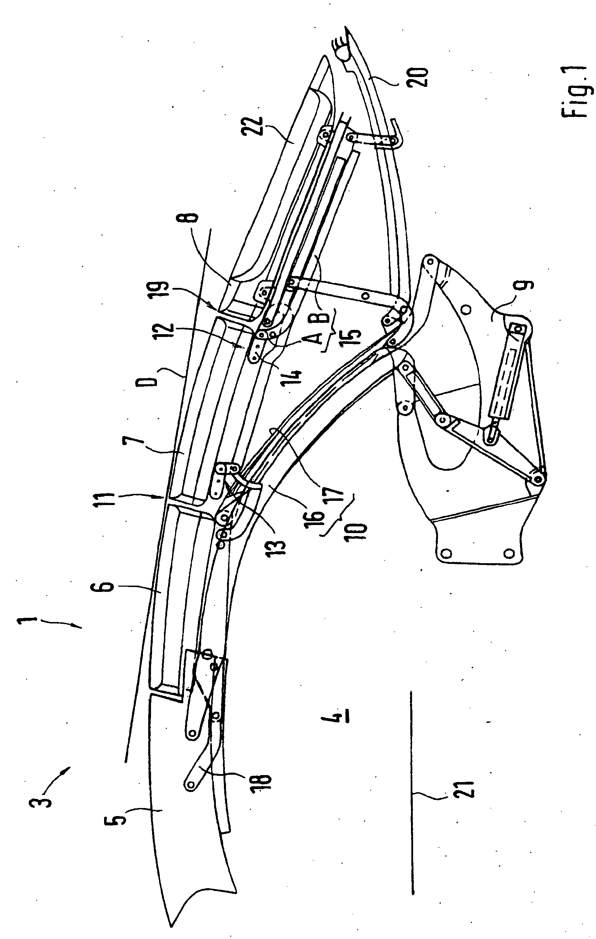

Die Erfindung ist anhand von vorteilhaften Ausführungsbeispielen in den Zeichnungsfiguren näher erläutert. Diese zeigen
- Fig. 1: eine schematische Darstellung eines flexiblen Fahrzeugdaches in der Geschlossenstellung;
- Fig. 2: ein Fahrzeugdach gemäß Fig. 1 in einer ersten Bewegungsphase während der Verdecköffnungsbewegung;

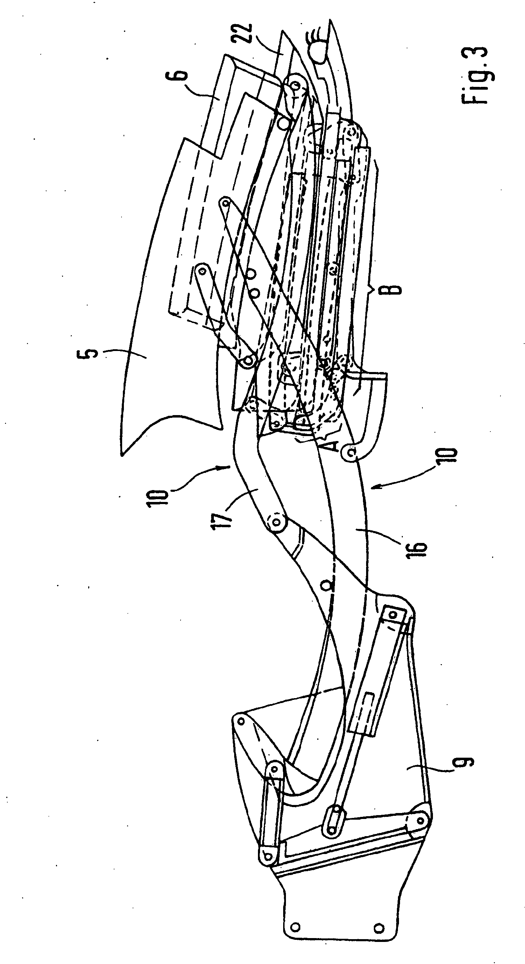

- Fig.3: ein Fahrzeugdach gemäß Figur 1 - 2 in der Öffnungsendlage (Packstellung);
- Fig. 4: flexibles Fahrzeugdach in Draufsicht gemäß Fig. 1.

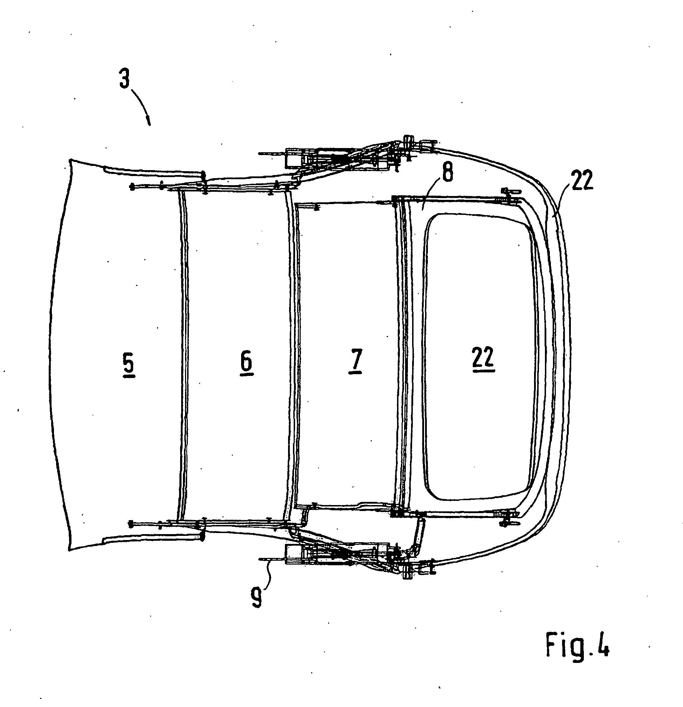

In Zeichnungsfigur 1 ist ein flexibles Fahrzeugdach 1, mit einer flexiblen Dachhaut 2 und einer Mehrzahl von mit dieser zusammenwirkenden Stützelementen dargestellt, die zumindest zum Teil bereichsweise als flächige, die Dachhaut 2 stützende Flächenelemente 3 bzw. Schalen ausgebildet sind und gemeinsam mit der Dachhaut 2 von einer Schließstellung in eine den Fahrzeuginnenraum 4 freigebende Öffnungsstellung verlagerbar sind, wobei mehrere der Flächenelemente 3 in eine zumindest bereichsweise Überdeckung bringbar sind. Ein erstes, in Schließstellung an dem die Windschutzscheibe aufnehmenden Rahmen anschließendes Flächenelement 5 (Dachnase) ist gemeinsam mit einem zweiten, daran anschließenden Flächenelement 6 in Öffnungsstellung über ein viertes, eine Heckscheibe 22 umfassendes Element 8 angeordnet (siehe Fig. 4) und ein drittes, in Schließstellung zwischen dem zweiten 6 und dem vierten 8 angeordnetes Flächenelement 7 verlagert sich während der Öffnungsphase zwangsgekoppelt in eine unter dem vierten Element 8 liegende Packstellung.

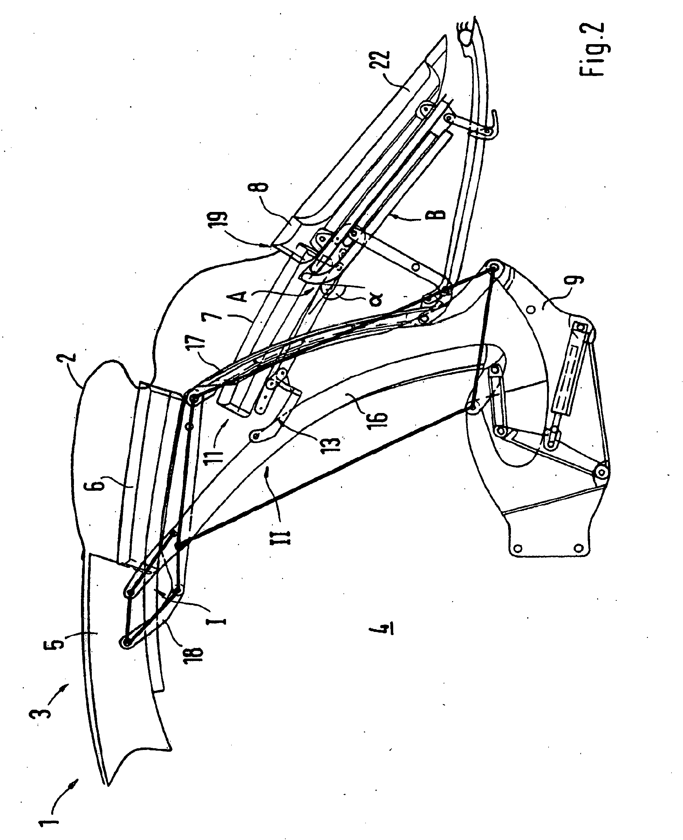

Der Aufbau und die Anordnung der Gelenkstreben einer bevorzugten Ausführungsform des erfindungsgemäßen flexiblen Fahrzeugdaches 1 ist am besten aus Fig. 2 ersichtlich, in der das Fahrzeugdach 1 etwa halb geöffnet ist. Das erste Flächenelement 5 verlagert sich während der Öffnungsphase über das zweite Flächenelement 6. Diese beiden Flächenelemente 5, 6 verlagern sich zusammen mit dem vierten Element 8 in einer z-artigen Bewegung, wobei die Flächenelemente 5, 6 den oberen Schenkel, die die Flächenelemente 5, 6 mit einem karosserieseitigen Hauptlager 9 verbindenden Lenker 10, den mittleren Schenkel des Z und das dritte und das vierte Dachelement 7, 8 den unteren Schenkel des Z bilden.

Im Bereich der Vorderkante 11 und der Hinterkante 12 des dritten Flächenelementes 7 sind nach unten abstehende Haltearme 13, 14 angeordnet. Die Haltearme 13, 14 müssen nicht zwingend als einstückiges Bauteil konstruiert sein, sondern können beispielsweise auch als mehrgliedrige Lenkerketten ausgebildet sein. Der vordere Haltearm 13 ist an einem mindestens ein Flächenelement 5, 6, 7 abstützenden Lenker 9 gelenkig befestigt. Der hintere Haltearm 14 ist in einer Führungskulisse 15, beispielsweise einer Führungsnut, die im Bereich des vierten Elementes 8 angeordnet ist, sowohl dreh- als auch linearbeweglich gelagert.
Der Aufbau und die Anordnung der Gelenkstreben einer bevorzugten Ausführungsform des erfindungsgemäßen flexiblen Fahrzeugdaches 1 ist am besten aus den Zeichnungsfiguren 2 ersichtlich. Dabei ist das erste Flächenelement 5 von einem Dachlenker 16 und das zweite Flächenelement 6 von einem Hauptlenker 17 abgestützt. In der geschlossenen Verdeckstellung nehmen der Dachlenker 16 und der Hauptlenker 17 eine bereichsweise ineinandergreifende Stellung ein. Der vordere Haltearm 13 des dritten Flächenelementes 7 ist gelenkig am Dachlenker 16 befestigt. Der Dachlenker 16 ist an einem Ende am Hauptlager 17 und an dem gegenüberliegenden Ende am ersten Flächenelement 5 gelagert und an seinem dem ersten Flächenelement 5 zugewandten Bereich mit dem zweiten Flächenelement 6 gelenkig verbunden. Das zweite Flächenelement 6 ist zum einen über einen oberen Abschnitt des Dachlenkers 16 als auch mit einem Koppellenker 18 mit dem ersten Flächenelement 5 verbunden. Dieser Koppellenker 18 ist an einem vorderen unteren Bereich des zweiten Flächenelementes 6 und mit seinem anderen Ende an einem unteren Mittelbereich des ersten Dachelementes 5. drehbeweglich angelenkt. Folglich weist die Fahrzeugdachkonstruktion zwei Viergelenke I, II auf, wobei das erste Viergelenk I aus Bereichen des ersten Flächenelementes 5, des zweiten Flächenelementes 6, des oberen Bereiches des Dachlenkers 16 und des Koppellenkers 18 gebildet wird. Das zweite Viergelenk II wird aus dem nach unten weisenden Bereiches des Dachlenkers 16, eines Abschnittes des zweiten Flächenelementes 6, dem Lenker 17 und der karosserieseitigen Lagerung der Rotationspunkte des Dachlenkers 16 und des Hauptlenkers 17 gebildet, der beispielsweise in einem Hauptlager 9 befestigt sein kann. Über diese beiden Viergelenke I, II wird es ermöglicht, zum einen relativ großen Insassenraum mit den Flächenelementen 5, 6, 7 zu übergreifen und gleichzeitig die auf das Hauptlager 9 wirkenden Kräfte infolge des Eigengewichtes des Verdecks relativ gering zu halten.

Das dritte Flächenelement 7 wird während der Öffnungsphase in einer zum vierten Element 8 im wesentlichen parallelen Bewegung geführt, wobei die die Bewegung initiierende Kraft sich zum größten Teil aus der Bewegung des Dachlenkers 16 ergibt und zusätzlich die Gewichtskraft des dritten Dachelementes 7 zum Tragen kommt. Das dritte Flächenelement 7 durchläuft während der Öffnungsphase zwei Bewegungsphasen, wobei in der ersten Bewegungsphase die Bewegung eine aus der Dachebene D unten gerichtete Komponente und eine parallel zum vierten Element 8 gerichtete weitere Richtungskomponente durchläuft und in der zweiten Bewegungsphase eine im wesentlichen lineare und parallel zum vierten Element 8 gerichtete Bewegung ausgeführt wird. Um eine derartige Bewegung des dritten Flächenelementes 7 auf einfache Weise zu realisieren, ist es vorgesehen, die am vierten Dachelement 8 angeordnete Führungskulisse 15 mit wenigstens zwei Abschnitten A, B auszubilden, die miteinander einen stumpfen Winkel α einschließen. Während der ersten Bewegungsphase der Öffnungsbewegung verlagert sich das vierte Element 8 mit seiner Vorderkante 19 nach oben hinten und in der anschließenden Bewegungsphase wird diese Vorderkante 19 nach unten hinten abgesenkt. Diese Aufstellbewegung des vierten Elementes 8 in der ersten Phase der Öffnungsbewegung des Fahrzeugdaches 1 begünstigt den zwangsgesteuerten Bewegungsablauf des dritten Flächenelementes 7, dessen Bewegung durch den Dachlenker 16 und die Kulissenführung 15 bestimmt ist.

Durch die Verlagerung des ersten Flächenelementes 5 nach hinten oben wird die Spannung der Dachhaut 2 gelöst. Mit dieser Dachhaut 2 ist auch der Spannbügel 20 verbunden. Der unterhalb des vierten Dachelementes 8 im wesentlichen auf Höhe der Brüstungslinie 21 in der geschlossenen Verdeckposition angeordnet ist und durch die Lösung der Spannung der Dachhaut 2 sich in einer ersten Bewegungsphase der Öffnungsbewegung in Form einer bogenförmigen Bewegung nach hinten unten bewegt und anschließend nach Erreichen der vertikalen Endlage (Beaufschlagung des Bodens des Verdeckkastens) eine im wesentlichen lineare nach hinten gerichtete Bewegung ausführt.

Der Verdeckstoff 2 ist am ersten Flächenelement 5 wenigstens teilweise flächig und an dem zweiten Flächenelement 6 linienartig oder punktuell verbunden. Weiter ist die Dachhaut 2 an der Vorderkante 19 des vierten Elementes 8 angebunden und umgreift in bekannter Weise die Heckscheibe 22. Entscheidend für die positive Kinematik des dritten Flächenelementes 7 ist es, daß die Dachhaut 2 nicht mit dem dritten Flächenelement 7 fest verbunden ist. Das dritte Flächenelement 7 beaufschlagt die Dachhaut 2 lediglich in der geschlossenen Verdeckstellung und übt eine tragende Funktion aus. Mit Ausnahme der Flächenelemente, des vierten Elementes 8, der Heckscheibe 22 und des Spannbügels 20 sind alle bislang beschriebenen Elemente an beiden Fahrzeuglängsseiten symmetrisch angeordnet, jedoch in der Seitenansicht nur einmal zu sehen.

Die Antriebseinheit für das Fahrzeugdach (1) ist im einzelnen nicht näher dargestellt und kann in üblicher Weise z.B. an dem Hauptlenker (17) des Fahrzeugdaches (1) angreifen.

Beim dargestellten Ausführungsbeispiel wird die Bewegung des Spannbügels (20) wesentlich durch den hinteren Bereich der flexiblen Dachhaut (2) beeinflußt, der linienartig an dem Spannbügel (20) befestigt ist. Es ist aber auch möglich, die Bewegung des Spannbügels (20) während der Öffnungs- und Schließphase durch Kopplungshebel zwischen dem vierten Dachelement (8) und dem Spannbügel (20) genauer zu definieren.

### Bezugszeichenliste

- 1: Fahrzeugdach
- 2: Dachhaut
- 3: Flächenelement
- 4: Fahrzeuginnenraum
- 5: erstes Flächenelement
- 6: zweites Flächenelement
- 7: drittes Flächenelement
- 8: viertes Flächenelement
- 9: Hauptlager
- 10: Lenker
- 11: Vorderkante v. 7
- 12: Hinterkante v. 7
- 13: Haltearm vorne
- 14: Haltearm hinten
- 15: Führungskulisse
- 16: Dachlenker
- 17: Hauptlenker
- 18: Koppellenker
- 19: Vorderkante v. 8
- 20: Spannbügel
- 21: Brüstungslinie
- 22: Heckscheibe
- I: Viergelenk
- II: Viergelenk
- D: Dachebene
- A: Abschnitt
- B: Abschnitt
- α: stumpfer Winkel

## Patentansprüche

1. Flexibles Fahrzeugdach (1), mit einer flexiblen Dachhaut (2) und einer Mehrzahl von mit dieser zusammen wirkenden Stützelementen, die zumindest zum Teil bereichsweise als flächige, die Dachhaut (2) stützende Flächenelemente (5, 6, 7, 8) ausgebildet sind und gemeinsam mit der Dachhaut (2) von einer Schließstellung in eine den Fahrzeuginnenraum (4) freigebende Öffnungsstellung verlagerbar sind, wobei mehrere der Flächenelemente (5, 6, 7, 8) in eine zumindest bereichsweise Überdeckung bringbar sind, **dadurch gekennzeichnet, dass** das Fahrzeugdach (1) vier zumindest teilweise als Flächenelemente (5, 6, 7, 8) ausgebildete und in der Schließstellung eine Dachfläche bildend hintereinander angeordnete Stützelemente umfasst und dass das erste die Dachnase bildende vordere Flächenelement (5) durch einen an einem Hauptlager (9) gelagerten Dachlenker (16) gemeinsam mit dem zweiten daran anschließenden Flächenelement (6), das sich an einem am Hauptlager (9) gelagerten Hauptlenker (17) abstützt und mittels einer zueinander erfolgenden Parallelverschiebung in die Öffnungsstellung über einen hinteren eine Heckscheibe (22) umfassenden vierten Flächenelement (8) angeordnet ist und dass ein an das zweite Flächenelement (6) anschließendes weiteres drittes Flächenelement (7) während einer Öffnungsphase zwangsgekoppelt linear in eine unter dem hinteren vierten Flächenelement (8) liegende Packstellung mittels eines zum vierten Flächenelement (8) parallelen Bewegung verschiebbar ist.

2. Flexibles Fahrzeugdach nach Anspruch 1, **dadurch gekennzeichnet, dass** das erste, vordere, die Dachnase bildende Flächenelement (5) gemeinsam mit einem zweiten daran anschließenden Flächenelement (6) in Öffnungsstellung über dem vierten hinteren Element (8) angeordnet ist.

3. Flexibles Fahrzeugdach nach Anspruch 1 oder 2, **dadurch gekennzeichnet, dass** sich das erste Flächenelement (5) während der Öffnungsphase über das zweite Flächenelement (6) verlagert und zusammen mit dem vierten Element (8) in einer Z-Einfaltbewegung das zweite Flächenelement (6) einschließt.

4. Flexibles Fahrzeugdach nach einem der Ansprüche 1 - 3, **dadurch gekennzeichnet, dass** das dritte Flächenelement (7) mit einem mindestens eines der Flächenelemente (5, 6, 7) abstützenden Lenker (9) in einer Schubbewegung auslösenden Wirkverbindung steht.

5. Flexibles Fahrzeugdach nach Anspruch 4, **dadurch gekennzeichnet, dass** im Bereich der Vorderkante (11) und der Hinterkante (12) des dritten Flächenelementes (7) nach unten abstehende Haltearme (13, 14) angeordnet sind, von denen der vordere Haltearm (13) am Lenker (9) gelenkig befestigt ist und von denen der hintere Haltearm (14) in einer im Bereich des vierten Elementes (8) angeordneten Kulissenführung (15) gelagert ist.

6. Flexibles Fahrzeugdach nach einem der vorhergehenden Ansprüche, **dadurch gekennzeichnet, dass** das erste Flächenelement (5) von einem Dachlenker (16) und das zweite Flächenelement (6) von einem Hauptlenker (17) abgestützt wird, wobei der vordere Haltearm (13) des dritten Flächenelementes (7) gelenkig am Dachlenker (16) befestigt ist.

7. Flexibles Fahrzeugdach nach Anspruch 6, **dadurch gekennzeichnet, dass** der Dachlenker (16) mit seinem einen Ende am Hauptlager (9) und mit seinem dem gegenüberliegenden Ende am ersten Flächenelement (5) gelagert ist und an seinem dem ersten Flächenelement (5) zugewandten Bereich mit dem zweite Flächenelement (6) gelenkig verbunden ist.

8. Flexibles Fahrzeugdach nach einem der vorhergehenden Ansprüche, **dadurch gekennzeichnet, dass** das dritte Flächenelement (7) während der Öffnungsphase in einer zum vierten Element (8) im wesentlichen parallelen Bewegung geführt ist.

9. Flexibles Fahrzeugdach nach einem der vorhergehenden Ansprüche, **dadurch gekennzeichnet, dass** das dritte Flächenelement (7) während der Öffnungsphase zwei Bewegungsphasen durchläuft, wobei das dritte Flächenelement (7) des Fahrzeugdaches (1) in einer ersten Bewegungsphase sowohl mit einer aus der Dachebene (D) nach unten gerichteten als auch einer parallel zum vierten Element (8) gerichteten Bewegung antreibbar ist und in einer zweiten Bewegungsphase im wesentlichen linear und parallel zum vierten Element (8) bewegbar ist.

10. Flexibles Fahrzeugdach nach einem der vorhergehenden Ansprüche, **dadurch gekennzeichnet, dass** die am vierten Element (8) angeordnete Führungskulisse (15) wenigstens zwei Abschnitte (A, B) aufweist, die miteinander einen stumpfen Winkel (α) einschließen.

11. Flexibles Fahrzeugdach nach einem der vorhergehenden Ansprüche, **dadurch gekennzeichnet, dass** das vierte Element (8) in der ersten Bewegungsphase der Öffnungsbewegung mit seiner Vorderkante (19) nach oben, hinten überführbar und in der anschließenden Bewegungsphase diese Vorderkante (19) nach unten hinten absenkbar ist.

12. Flexibles Fahrzeugdach nach einem der vorhergehenden Ansprüche, **dadurch gekennzeichnet, dass** ein Spannbügel (20) in der ersten Bewegungsphase der Öffnungsbewegung des Fahrzeugdaches (1) eine bogenförmige, nach hinten unten gerichtete und in einer anschließenden Bewegungsphase eine im wesentlichen lineare nach hinten gerichtete Bewegung ausführt.

13. Flexibles Fahrzeugdach nach einem der vorhergehenden Ansprüche, **dadurch gekennzeichnet, dass** das dritte Flächenelement (7) nicht mit dem Verdeckstoff (2) verbunden ist.

14. Flexibles Fahrzeugdach nach einem der vorhergehenden Ansprüche, **dadurch gekennzeichnet, dass** der Verdeckstoff (2) mit ersten Flächenelement (5) wenigstens teilweise flächig und mit dem zweiten Flächenelement (6) bereichsweise linienartig oder punktuell verbunden ist.

## Claims

1. Flexible vehicle roof (1), with a flexible roof skin (2) and a plurality of supporting elements which interact with the latter and are designed at least partially in some regions as sheetlike surface elements (5, 6, 7, 8), which support the roof skin (2), and can be shifted together with the roof skin (2) from a closed position into an open position opening up the vehicle interior (4), with it being possible for a plurality of the surface elements (5, 6, 7, 8) to be brought into overlap at least in some regions, **characterized in that** the vehicle roof (1) comprises four supporting elements which are designed at least partially as surface elements (5, 6, 7, 8) and, in the closed position, are arranged one behind another forming a roof surface, and **in that** the first, front surface element (5) forming the roof plug is arranged by means of a roof link (16), which is mounted on a main bearing (9), together with the second surface element (6) which adjoins the first surface element and is supported on a main link (17), which is mounted on the main bearing (9), above a rear, fourth surface element (8) surrounding a rear window (22) by means of a mutual parallel displacement into the open position, and **in that**, during an opening phase, a further, third surface element (7) adjoining the second surface element (6) can be displaced linearly in a positively coupled manner into a packing position located below the rear, fourth surface element (8) by means of a movement parallel to the fourth surface element (8).

2. Flexible vehicle roof according to Claim 1, **characterized in that**, in the open position, the first, front surface element (5) forming the roof lug is arranged together with a second adjoining surface element (6) above the fourth, rear element (8).

3. Flexible vehicle roof according to Claim 1 or 2, **characterized in that**, during the opening phase, the first surface element (5) is shifted above the second surface element (6) and, together with the fourth element (8), encloses the second surface element (6) in a Z folding-in movement.

4. Flexible vehicle roof according to one of Claims 1-3, **characterized in that** the third surface element (7) is in operative connection with a link (9) supporting at least one of the surface elements (5, 6, 7), the operative connection triggering a translatory movement.

5. Flexible vehicle roof according to Claim 4, **characterized in that** in the region of the front edge (11) and the rear edge (12) of the third surface element (7) there are arranged downwardly protruding holding arms (13, 14), of which the front holding arm (13) is fastened to the link (9) in an articulated manner and of which the rear holding arm (14) is mounted in a slotted guide mechanism (15) arranged in the region of the fourth element (8).

6. Flexible vehicle roof according to one of the preceding claims, **characterized in that** the first surface element (5) is supported by a roof link (16) and the second surface element (6) is supported by a main link (17), with the front holding arm (13) of the third surface element (7) being fastened to the roof link (16) in an articulated manner.

7. Flexible vehicle roof according to Claim 6, **characterized in that** the roof link (16) is mounted at its one end on the main bearing (9) and at its opposite end on the first surface element (5) and, at its region facing the first surface element (5), is connected to the second surface element (6) in an articulated manner.

8. Flexible vehicle roof according to one of the preceding claims, **characterized in that** the third surface element (7) is guided in a movement essentially parallel to the fourth element (8) during the opening phase.

9. Flexible vehicle roof according to one of the preceding claims, **characterized in that** the third surface element (7) passes through two movement phases during the opening phase, the third surface element (7) of the vehicle roof (1) being drivable, in a first movement phase, both with a movement directed downward from the roof plane (D) and with a movement directed parallel to the fourth element (8), and, in a second movement phase, being movable essentially linearly and parallel to the fourth element (8).

10. Flexible vehicle roof according to one of the preceding claims, **characterized in that** the guide slot (15) arranged on the fourth element (8) has at least two sections (A, B) which enclose an obtuse angle (α) with each other.

11. Flexible vehicle roof according to one of the preceding claims, **characterized in that**, in the first movement phase of the opening movement, the fourth element (8) can be moved upward at the rear by its front edge (19) and, in the subsequent movement phase, said front edge (19) can be lowered downward at the rear.

12. Flexible vehicle roof according to one of the preceding claims, **characterized in that**, in the first movement phase of the opening movement of the vehicle roof (1), a clamping bow (20) executes a curved movement directed to the rear and downward and, in a subsequent movement phase, an essentially linear, rearwardly directed movement.

13. Flexible vehicle roof according to one of the preceding claims, **characterized in that** the third surface element (7) is not connected to the top fabric (2).

14. Flexible vehicle roof according to one of the preceding claims, **characterized in that** the top fabric (2) is connected to the first surface element (5) at least partially in a sheetlike manner and to the second surface element (6) linearly or at points in some regions.

## Revendications

1. Toit de véhicule flexible (1), comprenant un panneau de toit flexible (2) et une pluralité d'éléments de support coopérant avec celui-ci, lesquels éléments de support sont réalisés au moins en partie par sections sous forme d'éléments de surface plats (5, 6, 7, 8) supportant le panneau de toit (2) et peuvent être déplacés conjointement avec le panneau de toit (2) depuis une position de fermeture jusque dans une position d'ouverture ouvrant l'habitacle du véhicule (4), plusieurs des éléments de surface (5, 6, 7, 8) pouvant être amenés à se recouvrir au moins par sections, **caractérisé en ce que** le toit de véhicule (1) comprend quatre éléments de support réalisés au moins en partie sous forme d'éléments de surface (5, 6, 7, 8) et disposés les uns derrière les autres en formant une surface de toit dans la position fermée et **en ce que** le premier élément de surface avant (5) formant l'avant du toit est disposé, au moyen d'un bras oscillant de toit (16) monté sur un palier principal (9), conjointement avec le deuxième élément de surface (6) s'y raccordant, lequel deuxième élément de surface s'appuie sur un bras oscillant principal (17) monté sur le palier principal (9), au moyen d'un déplacement parallèle l'un par rapport à l'autre dans la position d'ouverture par-dessus un quatrième élément de surface arrière (8) entourant une vitre arrière (22), et **en ce qu'**un troisième élément de surface supplémentaire (7) se raccordant au deuxième élément de surface (6) peut être déplacé pendant une phase d'ouverture par accouplement forcé linéairement dans une position de rangement située en dessous du quatrième élément de surface arrière (8), au moyen d'un mouvement parallèle au quatrième élément de surface (8).

2. Toit de véhicule flexible selon la revendication 1, **caractérisé en ce que** le premier élément de surface avant (5) formant l'avant du toit est disposé conjointement avec un deuxième élément de surface (6) s'y raccordant dans la position d'ouverture au-dessus du quatrième élément arrière (8) .

3. Toit de véhicule flexible selon la revendication 1 ou 2, **caractérisé en ce que** le premier élément de surface (5) est déplacé par-dessus le deuxième élément de surface (6) pendant la phase d'ouverture et enferme, conjointement avec le quatrième élément (8), dans un mouvement de repliement en Z, le deuxième élément de surface (6) .

4. Toit de véhicule flexible selon l'une quelconque des revendications 1 à 3, **caractérisé en ce que** le troisième élément de surface (7) est en liaison fonctionnelle déclenchant un mouvement de poussée avec un bras oscillant (9) supportant au moins l'un des éléments de surface (5, 6, 7).

5. Toit de véhicule flexible selon la revendication 4, **caractérisé en ce que** dans la région de l'arête avant (11) et de l'arête arrière (12) du troisième élément de surface (7) sont disposés des bras de retenue saillant vers le bas (13, 14) dont le bras de retenue avant (13) est fixé de manière articulée au bras oscillant (9) et dont le bras de retenue arrière (14) est monté dans un guide à coulisse (15) disposé dans la région du quatrième élément (8).

6. Toit de véhicule flexible selon l'une quelconque des revendications précédentes, **caractérisé en ce que** le premier élément de surface (5) est supporté par un bras oscillant de toit (16) et le deuxième élément de surface (6) est supporté par un bras oscillant principal (17), le bras de retenue avant (13) du troisième élément de surface (7) étant fixé de manière articulée au bras oscillant de toit (16).

7. Toit de véhicule flexible selon la revendication 6, **caractérisé en ce que** le bras oscillant de toit (16) est supporté avec l'une de ses extrémités sur le palier principal (9) et avec son extrémité opposée sur le premier élément de surface (5) et est connecté de manière articulée au deuxième élément de surface (6) au niveau de sa région tournée vers le premier élément de surface (5).

8. Toit de véhicule flexible selon l'une quelconque des revendications précédentes, **caractérisé en ce que** le troisième élément de surface (7) est guidé pendant la phase d'ouverture dans un mouvement essentiellement parallèle au quatrième élément (8).

9. Toit de véhicule flexible selon l'une quelconque des revendications précédentes, **caractérisé en ce que** le troisième élément de surface (7), pendant la phase d'ouverture, passe par deux phases de mouvement, le troisième élément de surface (7) du toit de véhicule (1) pouvant être entraîné dans une première phase de mouvement à la fois dans un mouvement orienté vers le bas depuis le plan du toit (D) et dans un mouvement orienté parallèlement au quatrième élément (8) et pouvant être déplacé dans une deuxième phase de mouvement essentiellement linéairement et parallèlement au quatrième élément (8).

10. Toit de véhicule flexible selon l'une quelconque des revendications précédentes, **caractérisé en ce que** la coulisse de guidage (15) disposée sur le quatrième élément (8) présente au moins deux sections (A, B) qui forment ensemble un angle obtus (α).

11. Toit de véhicule flexible selon l'une quelconque des revendications précédentes, **caractérisé en ce que** le quatrième élément (8) peut être transféré lors de la première phase de mouvement du mouvement d'ouverture avec son arête avant (19) vers le haut et vers l'arrière et, dans la phase de mouvement suivante, cette arête avant (19) peut être abaissée vers le bas et vers l'arrière.

12. Toit de véhicule flexible selon l'une quelconque des revendications précédentes, **caractérisé en ce qu'**un arceau tendeur (20), dans la première phase de mouvement du mouvement d'ouverture du toit de véhicule (1), effectue un mouvement arqué, orienté vers l'arrière et vers le bas, et dans une phase de mouvement suivante, effectue un mouvement essentiellement linéaire orienté vers l'arrière.

13. Toit de véhicule flexible selon l'une quelconque des revendications précédentes, **caractérisé en ce que** le troisième élément de surface (7) n'est pas connecté à la toile de la capote (2).

14. Toit de véhicule flexible selon l'une quelconque des revendications précédentes, **caractérisé en ce que** la toile de la capote (2) est connectée au premier élément de surface (5) au moins en partie à plat et par sections au deuxième élément de surface (6) sous forme linéaire ou ponctuelle.
